# EUROPEAN PATENT APPLICATION

(11) **EP 3 385 290 A1**
(43) Date of publication of application: **10.10.2018**
(21) Application number: 16870685.1
(22) Date of filing: 30.11.2016
(51) Int. Cl.: C08F 212/08, B29C 47/00, C08F 220/14, C08F 222/06, C08K 5/134, C08K 5/524, C08L 25/14, C08L 33/10, G02B 1/04, B29K 25/00

(54) **TRANSPARENT HIGHLY HEAT-RESISTANT STYRENE COPOLYMER**

(30) Priority: 30.11.2015 JP 2015232654
(71) Applicant: Denka Company Limited, Tokyo 103-8338 (JP)
(72) Inventor: NISHINO, Kohhei, Ichihara-city Chiba 290-8588 (JP); SHINDO, Yuichi, Ichihara-city Chiba 290-8588 (JP); SHIMOKOBA, Yuichi, Ichihara-city Chiba 290-8588 (JP); NOGUCHI, Tetsuo, Ichihara-city Chiba 290-8588 (JP); MATSUMOTO, Masanori, Ichihara-city Chiba 290-8588 (JP); KUROKAWA, Yoshinari, Ichihara-city Chiba 290-8588 (JP)
(74) Representative: Gulde & Partner
(86) International application number: PCT/JP2016/085478
(87) International publication number: WO 2017/094748

(57) **Abstract**

An object of the present invention is to provide a styrene-based copolymer and styrene-based resin composition excellent in hue and heat resistance.

The present invention provides a transparent styrene-based copolymer (A), comprising: a styrene-based monomer unit; a (meth) acrylate ester-based monomer unit; and an unsaturated dicarboxylic acid anhydride-based monomer unit, wherein a content of residual unsaturated dicarboxylic acid anhydride-based monomer is 100 ppm or less. The present invention also provides a resin composition further comprising a hindered phenol-based antioxidant and a phosphorus-based antioxidant, and a resin composition further comprising a methacrylic resin.

## Description

### Technical Field

The present invention relates to a transparent resin and highly heat-resistant composition that is excellent in hue.

### Background Art

Transparent resins such as a methacrylic resin and a polystyrene are used for various applications such as parts of household electric appliances, automobile parts, food packaging containers, building materials, miscellaneous goods and the like. In addition, it is also used as an optical member for liquid crystal displays such as optical films, diffusing plates, light guide plates and the like, taking advantage of excellent transparency. Although the methacrylic resin and the polystyrene have good optical properties such as transparency, they have problems such as low heat resistance, and they have been used only for limited uses. As a technology for enhancing the heat resistance, there are the following.

### Citation List

### Patent Literature

Patent Literature 1: JPS57-153008
Patent Literature 2: WO2009/031544
Patent Literature 3: WO2014/021264

### Summary of Invention

### Technical Problem

An object of the present invention is to provide new styrene-based copolymer and styrene-based resin composition excellent in resistance.

### Solution to Problem

(1) A transparent styrene-based copolymer (A), comprising: a styrene-based monomer unit; a (meth) acrylate ester-based monomer unit; and an unsaturated dicarboxylic acid anhydride-based monomer unit, wherein a content of residual unsaturated dicarboxylic acid anhydride-based monomer is 100 ppm or less.
(2) The transparent styrene-based copolymer (A) of (1), comprising: 45 to 85 mass% of the styrene-based monomer unit; 5 to 45 mass% of the (meth) acrylic acid ester-based monomer unit; and 10 to 30 mass% of the unsaturated dicarboxylic acid anhydride-based monomer unit.
(3) The transparent styrene-based copolymer (A) of (1) or (2), wherein the transparent styrene-based copolymer (A) is used for improving heat resistance of a methacrylic resin.
(4) The transparent styrene-based copolymer (A) of any one of (1) to (3), wherein Vicat softening temperature measured in the condition of a load of 50 N is 125 °C or more.
(5) A transparent styrene-based resin composition, comprising: the transparent styrene-based copolymer (A) of any one of (1) to (4); a hindered phenol-based antioxidant (B); and a phosphorus-based antioxidant (C), wherein a content of (B) is 0.02 to 0.5 mass% and a content of (C) is 0.02 to 0.5 mass% with respect to the total amount of (A) to (C).
(6) A transparent styrene-based resin composition, comprising: the transparent styrene-based copolymer (A) of any one of Claims 1 to 4; and 6-[3-(3-t-butyl-4-hydroxy-5-methylphenyl)propoxy]-2,4,8,10-tetra-t-butylbenz [d,f] [1,3,2] dioxaphosphepin (D), wherein a content of (D) is 0.02 to 0.5 mass% with respect to the total amount of (A) and (D).
(7) The transparent styrene-based resin composition of (5) or (6), wherein Vicat softening temperature measured in the condition of a load of 50 N is 125 °C or more.
(8) A resin composition, comprising: the transparent styrene-based copolymer (A) of any one of (1) to (4); and a methacrylic resin.
(9) A resin composition, comprising: the transparent resin composition of any one of (5) to (7); and a methacrylic resin.
(10) A molded article comprising the transparent styrene-based copolymer (A) of any one of (1) to (4).
(11) A molded article comprising the transparent resin composition of any one of (5) to (7).
(12) A molded article comprising the resin composition of (8) or (9).

### Advantageous Effects of Invention

Since the styrene-based copolymer and styrene-based resin composition of the present invention are transparent and excellent in hue, they are useful for parts of household electric appliances, automobile parts, building materials, optical members, food containers and the like of requiring heat resistance and good appearance. The styrene-based copolymer and styrene-based resin composition of the present invention can be also used by mixing with a methacrylic resin.

### Description of Embodiments

### <Explanation of Terms>

In the present specification, for example, the expression "A to B" means A or more and B or less.

Hereinafter, embodiments of the present invention will be described in detail.

The styrene copolymer of the present invention is a copolymer having a styrene-based monomer unit, a (meth) acrylate ester-based monomer unit and an unsaturated dicarboxylic acid anhydride-based monomer unit, for example, styrene-methyl methacrylate-maleic anhydride copolymer.

The styrene-based monomer unit is styrene, o-methylstyrene, m-methylstyrene, p-methylstyrene, 2,4-dimethylstyrene, ethylstyrene, p-t-butylstyrene, α-methylstyrene, α-methyl-p-methylstyrene and the like. Among them, preferably the styrene-based monomer is styrene. The styrene-based monomer may comprise one type of these monomers or may comprise two or more types of these monomers.

The (meth) acrylic acid ester-based monomer unit is a methacrylic acid ester monomer such as methyl methacrylate, ethyl methacrylate, n-butyl methacrylate, 2-ethylhexyl methacrylate, dicyclopentanyl methacrylate, isobornyl methacrylate; and acrylate ester monomer such as methyl acrylate, ethyl acrylate, n-butyl acrylate, 2-methylhexyl acrylate, 2-ethylhexyl acrylate, decyl acrylate. Among these, preferably, the (meth) acrylic acid ester monomer is methyl methacrylate. The (meth) acrylic acid ester-based monomer may comprise one type of these monomers or may comprise two or more types of these monomers. When two or more types are used in combination, (meth) acrylic acid ester monomer preferably comprises methyl acrylate or ethyl acrylate, and the proportion of methyl acrylate or ethyl acrylate with respect to the total amount of the (meth) acrylic acid ester-based monomer unit is less than 10%.

The unsaturated dicarboxylic acid anhydride-based monomer is maleic anhydride, itaconic anhydride, citraconic anhydride, aconitic anhydride and the like. Among these, preferably, the unsaturated dicarboxylic acid anhydride-based monomer is maleic anhydride. The unsaturated dicarboxylic acid anhydride-based monomer may comprise one type of these monomers or may comprise two or more of these monomers.

In addition to the styrene-based monomer unit, the (meth) acrylic acid ester-based monomer unit and the unsaturated dicarboxylic acid anhydride-based monomer unit, the styrene-based copolymer may comprise, as long as they do not deteriorate the effect of the present invention, copolymerizable vinyl-based monomer units may be contained in the copolymer. Examples of the copolymerizable vinyl-based monomer includes vinyl cyanide monomers such as acrylonitrile and methacrylonitrile; vinyl carboxylic acid monomers such as acrylic acid and methacrylic acid; N-alkyl maleimide monomers such as N-methyl maleimide, N-ethyl maleimide, N-butyl maleimide and N-cyclohexyl maleimide; and N-aryl maleimide monomers such as N-phenyl maleimide, N-methyl phenyl maleimide and N-chlorophenyl maleimide. The copolymerizable vinyl-based monomer may comprise two or more types of these monomers.

The transparent styrene-based copolymer (A) comprises: preferably, 45 to 85 mass% of the styrene-based monomer unit; 5 to 45 mass% of the (meth) acrylic acid ester-based monomer unit; and 10 to 30 mass% of the unsaturated dicarboxylic acid anhydride-based monomer unit, more preferably, 50 to 73 mass% of the styrene-based monomer unit; 15 to 35 mass% of the (meth) acrylic acid ester-based monomer unit; and 12 to 25 mass% of the unsaturated dicarboxylic acid anhydride-based monomer unit. When a content of the styrene-based monomer unit is too less and a content of the (meth) acrylic acid ester-based monomer unit is too much, the moldability may deteriorate and the size of the molded article may change due to moisture absorption. When a content of the styrene-based monomer unit is too much and a content of the (meth) acrylic acid ester-based monomer unit is too less, the strength may decrease. When a content of the unsaturated dicarboxylic acid anhydride-based monomer unit is too less, compatibility with the methacrylic resin may be deteriorated, and the heat resistance also decreases. When a content of the unsaturated dicarboxylic acid anhydride-based monomer unit is too much, the moldability may be deteriorated due to a decrease in flowability, and the thermal stability of the styrene-based copolymer may be deteriorated. The composition analysis of each monomer unit is a value measured under the measurement conditions described below by the C-13 NMR.

Device name: FT-NMR AVANCE 300 (manufactured by BRUKER)
Solvent: Deuterated chloroform
Concentration: 14 mass%
Temperature: 27 °C
Number of integrations: 8000 times

An amount of a residual unsaturated dicarboxylic acid anhydride monomer contained in the styrene-based copolymer is 100 ppm or less, preferably less than 70 ppm. When the amount of the saturated dicarboxylic anhydride monomer is 100 ppm or less, a copolymer excellent in hue with less yellow tint is obtained. Since the unsaturated dicarboxylic acid anhydride has a high boiling point, it is difficult to remove the unsaturated dicarboxylic acid anhydride by devolatilization treatment. Therefore, if unreacted unsaturated dicarboxylic acid anhydride monomer remains at the completion of polymerization, the unsaturated dicarboxylic acid anhydride monomer is contained in the styrene-based copolymer as a residual unsaturated dicarboxylic acid anhydride. The amount of the residual unsaturated dicarboxylic acid anhydride monomer is a value measured by liquid chromatography. First, 200-250 mg of the copolymer is precisely weighed and dissolved in 5 mL of dichloroethane. 5 mL of hexane is added to the resulting solution and filter it with a syringe filter. 3 mL of the filtered solution and 3 mL of pure water are placed into about 10 mL of test tube, then, the test tube is capped and shaken for 2 hours with a shaker. By adding pure water, the unsaturated dicarboxylic anhydride monomer is hydrolyzed to be converted to an unsaturated dicarboxylic acid monomer, and transferred to the aqueous layer. After shaking, let it stand for 30 minutes, suck the lower layer (aqueous layer) of the solution divided into two layers with a syringe, and the sucked solution is a measurement sample. If it is difficult to separate into two layers, extend the shaking time and standing time. The amount of the residual unsaturated dicarboxylic acid anhydride monomer is a value evaluated by measuring the amount of unsaturated dicarboxylic acid under the following conditions.

Device name: LC-10 CLASS-VP (available from Shimadzu Corporation)
Column: YMC-Pack ODS-A 150 mm × 6.0 mm I. D S-5 µm, 12 nm
Detector: SPDM 10 Avp
Detection wavelength: 230 nm
Mobile phase: methanol/water = 50/50 phosphate buffer solution pH = 3.2
Flow rate: 1.0 mL/min
Injection volume: 20 µL

The weight average molecular weight (Mw) of the styrene-based copolymer is preferably 10 x 10⁴ to 30 x 10⁴, more preferably 14 x 10⁴ to 25 x 10⁴. The weight average molecular weight (Mw) in the range of 10 x 10⁴ to 30 x 10⁴ is preferred because of excellent balance between strength and moldability. The weight average molecular weight (Mw) of the styrene-based copolymer may be controlled by a polymerization temperature and a polymerization time in a polymerization step, a kind and amount of a polymerization initiator, a kind and amount of a chain transfer agent, a kind and amount of a solvent used during polymerization. The weight average molecular weight (Mw) is a polystyrene equivalent value measured by gel permeation chromatography (GPC) under conditions described below.

Device name: SYSTEM-21 Shodex (available from Showa Denko K.K.)
Column: Three PL gel MIXED-B series
Temperature: 40 °C
Detection: Differential refractive index
Solvent: Tetrahydrofuran
Concentration: 2 mass%
Calibration curve: it was prepared using standard polystyrene (PS) (available from PL).

As a polymerization method of the styrene-based copolymer, known methods can be used. A radical polymerization method is preferable, since the radical polymerization method is excellent in productivity due to a simple process.

As a method for producing the styrene-based copolymer, known methods can be used. For example, the styrene-based copolymer can be produced by a solution polymerization, a bulk polymerization or the like. Either a continuous method or a batch method can be used. In the copolymerization of the styrene-based monomer and the unsaturated dicarboxylic acid anhydride-based monomer, since the alternating copolymerizability is high and the polymerization composition can be uniformed by separately adding the unsaturated dicarboxylic acid anhydride-based monomer, it is preferable to carry out the polymerization by the solution polymerization. The solvent for the solution polymerization is preferably non-polymerizable from the viewpoint that by-products are difficult to form and has little adverse effect. Examples thereof include ketones such as acetone, methyl ethyl ketone, methyl isobutyl ketone, acetophenone, ethers such as tetrahydrofuran, 1,4-dioxane, aromatic hydrocarbons such as benzene, toluene, xylene and chlorobenzene, N,N-dimethylformamide, dimethyl sulfoxide, N-methyl-2-pyrrolidone and the like. Methyl ethyl ketone and methyl isobutyl ketone are preferred from the viewpoint of dissolution of monomers and copolymers and ease of solvent recovery. The amount of the solvent to be used is preferably from 10 to 100 parts by mass, more preferably from 30 to 80 parts by mass, with respect to 100 parts by mass of the obtained copolymer. When the amount of the solvent is too small, the viscosity of the polymer solution during polymerization tends to increase, which may make handling difficult during production. When the amount of solvent used is too large, the energy cost for solvent recovery may increase.

In the solution polymerization or the bulk polymerization of the styrene-based copolymer, a polymerization initiator and a chain transfer agent can be used, and the polymerization temperature is preferably in the range of 70 to 150 °C. Examples of the polymerization initiator include peroxides such as dibenzoyl peroxide, t-butyl peroxybenzoate, 1,1-bis(t-butylperoxy)-2-methylcyclohexane, t-butylperoxy isopropyl monocarbonate, t-butylperoxy-2-ethylhexanoate, t-butyl peroxyacetate, dicumyl peroxide, ethyl-3,3-di-(t-butylperoxy) butyrate and the like, azo compounds such as azobisisobutyronitrile, azobiscyclohexanecarbonitrile, azobismethylpropionitrile, azobismethylbutyronitrile and the like, and one or a combination of two or more thereof may be used. Two or more of these polymerization initiators can be used in combination. Among these, organic peroxides having a 10-hour half-life temperature of 70 to 110 °C are preferably used. Examples of the chain transfer agent include n-octyl mercaptan, n-dodecyl mercaptan, t-dodecyl mercaptan, α-methyl styrene dimer, ethyl thioglycolate, limonene, terpinolene and the like.

During the polymerization of the styrene-based copolymer, it is preferable to polymerize so that the composition distribution in the copolymer becomes small. Since the styrene-based monomer and the unsaturated dicarboxylic acid anhydride monomer have high alternating copolymerization property, it is preferable to add the unsaturated dicarboxylic acid anhydride monomer separately so as to correspond with the polymerization speed of the styrene-based monomer and the (meth)acrylic acid ester monomer. The polymerization speed can be controlled by adjusting polymerization temperature, polymerization period, type of the polymerization initiator, and addition amount of the polymerization initiator. It is preferable to add the polymerization initiator separately, since the polymerization speed can be controlled easily. Since a copolymer excellent in heat resistance and compatibility with a methacrylic resin can be obtained, it is preferable to decrease the composition distribution in the copolymer. The composition distribution in the copolymer can be evaluated by transparency of the styrene-based copolymer. As a measure of the composition distribution in the copolymer, the total light transmittance being measured in accordance with ASTM D1003 for a sample with 2 mm thickness is preferably 88% or more.

By controlling the rate of addition, timing of addition and rate of polymerization of the unsaturated dicarboxylic acid anhydride monomer so that the concentration of the unsaturated dicarboxylic acid anhydride monomer in the polymerization solution is 100 ppm or less at the completion of polymerization, the amount of the residual unsaturated dicarboxylic acid anhydride monomer in the styrene-based copolymer can be reduced to 100 ppm or less.

A known method can be used as a devolatilization method for removing unreacted monomers and volatile components such as solvents used for solution polymerization from the solution after completion of polymerization of the styrene-based copolymer. For example, a vacuum devolatilizing tank equipped with a preheater or a devolatilizing extruder with a vent can be used. The devolatilized molten styrene-based copolymer is transferred to a granulation process, extruded from a porous die in a strand form, and processed into a pellet shape by a cold cut method, an air hot cut method, or an underwater hot cut method.

By adding a hindered phenol-based antioxidant (B) and a phosphorus-based antioxidant (C) to the styrene-based copolymer (A), a styrene-based resin composition having more excellent hue can be obtained. It is preferred that the content of (B) is 0.02 to 0.5 mass% and the content of (C) is 0.02 to 0.5 mass% with respect to the total amount of (A) to (C).

The hindered phenol-based antioxidant (B) is an antioxidant having a phenolic hydroxyl group as a basic skeleton. Examples of the hindered phenol-based antioxidant include octadecyl-3-(3,5-di-t-butyl-4-hydroxyphenyl) propionate, ethylene bis (oxyethylene) bis [3-(5-tert-butyl-4-hydroxy-m-tolyl) propionate], 3,9-bis [2-[3-(3-tert-butyl-4-hydroxy-5-methylphenyl) propionyloxy]-1,1-dimethylethyl]-2,4,8,10-tetraoxaspiro[5.5]undecane, pentaerythritol tetrakis [3-(3,5-di-tert-butyl-4-hydroxyphenyl) propionate], 4,6-bis (octylthiomethyl)-o-cresol, 4,6-bis[(dodecylthio) methyl]-o-cresol, 2,4-dimethyl-6-(1-methylpentadecyl)phenol, tetrakis [methylene-3-(3,5-di-t-butyl-4-hydroxyphenyl) propionate] methane, 4,4'-thiobis (6-t-butyl-3-methylphenol), 1,1,3-tris (2-methyl-4-hydroxy-5-t-butylphenyl) butane, 4,4'-butylidenebis (3-methyl-6-t-butylphenol), bis-[3,3-bis-(4'-hydroxy-3'-tert-butylphenyl)-butanoic acid]-glycol ester, 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate and the like. The hindered phenol-based antioxidant is preferably octadecyl-3-(3,5-di-t-butyl-4-hydroxyphenyl) propionate, ethylene bis (oxyethylene) bis[3-(5-tert-butyl-4-hydroxy-m-tolyl) propionate], 3,9-bis [2- [3 -(3 -tert-butyl-4-hydroxy-5 -methylphenyl) propionyloxy]-1,1-dimethylethyl]-2,4,8,10-tetraoxaspiro[5.5]undecane, or pentaerythritol tetrakis [3-(3,5-di-tert-butyl-4-hydroxyphenyl) propionate]. The hindered phenol-based antioxidant may be used alone, or two or more kinds thereof may be used in combination.

The phosphorus-based antioxidant (C) is a phosphorous ester which is a trivalent phosphorus compound. Examples of the phosphorus-based antioxidant include 3,9-bis (2,6-di-tert-butyl-4-methylphenoxy)-2,4,8,10-tetraoxa-3,9-diphosphaspiro[5.5]undecane, bis (2,4-dicumylphenyl) pentaerythritol diphosphite, 2,2'-methylenebis (4,6-di-tert-butyl-1-phenyloxy)(2-ethylhexyloxy)phosphorus, tris (2,4-di-tert-butylphenyl) phosphite, bis[2,4-bis(1,1-dimethylethyl)-6-methylphenyl]ethyl ester phosphorous acid, bis (2,4-di-tert-butylphenyl) pentaerythritol diphosphite, cyclic neopentane tetrayl bis (octadecyl phosphite), bis (nonylphenyl) pentaerythritol diphosphite, tetrakis (2,4-di-tert-butylphenyl) 4,4'-biphenylene diphosphinate, 9,10-dihydro-9-oxa-10-phosphaphenanthrene-10-oxide, tetrakis (2,4-di-tert-butyl-5-methylphenyl) -4,4'-biphenylene diphosphonite and the like. The phosphorus-based antioxidant is preferably 3,9-bis (2,6-di-tert-butyl-4-methylphenoxy)-2,4,8,10-tetraoxa-3,9-diphosphaspiro[5.5]undecane, bis (2,4-dicumylphenyl) pentaerythritol diphosphite, 2,2'-methylenebis (4,6-di-tert-butyl-1-phenyloxy) (2-ethylhexyloxy) phosphorus, or tris (2,4-di-tert-butylphenyl) phosphite. The phosphorus-based antioxidant may be used alone, or two or more kinds thereof may be used in combination.

A styrene resin composition excellent in hue can also be obtained by adding 6-[3-(3-t-butyl-4-hydroxy-5-methylphenyl) propoxy]-2,4,8,10-tetra-t-butylbenz [d,f] [1,3,2] dioxaphosphepin (D) to the styrene-based copolymer (A). The content of (D) with respect to the total amount of (A) and (D) is preferably 0.02 to 0.5 mass%.

6-[3-(3-t-butyl-4-hydroxy-5-methylphenyl) propoxy]-2,4,8,10-tetra-t-butylbenz [d,f] [1,3,2] dioxaphosphepin (D) is a processing stabilizer having a hindered phenol skeleton and a phosphorus-based antioxidant skeleton in the same molecule. (D) may be used alone, or (D) and at least one of the phenol-based antioxidant (B) and the phosphorus-based antioxidant (C) may be used in combination.

As a method to prepare the styrene-based resin composition by adding the hindered phenol-based antioxidant (B) or the phosphorus-based antioxidant (C), 6-[3-(3-t-butyl-4-hydroxy-5-methylphenyl) propoxy] -2,4,8,10-tetra-t-butylbenz [d,f] [1,3,2] dioxaphosphepin (D), a known method can be used. For example, there is a method of melt blending with an extruder or the like. Examples of a melt blending apparatus include a single-screw extruder, a twin-screw extruder, a multi-screw extruder, a continuous kneader with a twin shaft rotor, a co kneader, and a Banbury mixer.

Since the styrene-based copolymer of the present invention is compatible with the methacrylic resin, it can be used for improving heat resistance of the methacrylic resin. The styrene-based copolymer and the methacrylic resin can be melt-blended at any ratio and used as a resin composition. The content of the methacrylic resin in the resin composition is preferably 85 mass% or less, more preferably 75 mass% or less. When the content of the methacrylic resin is too large, the heat resistance may be insufficient.

The methacrylic resin is a polymer having a (meth) acrylic acid ester monomer unit, for example, polymethyl methacrylate. In the present invention, the methacrylic resin can also have a styrene-based monomer unit. The styrene-based monomer unit can be used as a monomer unit thereof so that a content of the styrene-based monomer unit is 20 mass% or less. Commercially available methacrylic resins can be used.

As a method for producing the resin composition from the styrene-based copolymer and the methacrylic resin, a known method can be used. For example, there is a method of melt blending with an extruder or the like. Examples of a melt blending apparatus include a single-screw extruder, a twin-screw extruder, a multi-screw extruder, a continuous kneader with a twin shaft rotor, a co kneader, and a banbury mixer. Melt blending can be carried out simultaneously with adding the phenolic antioxidant (B) or the phosphorus-based antioxidants (C) and 6-[3-(3-t-butyl-4-hydroxy-5-methylphenyl) propoxy] -2,4,8,10-tetra-t-butylbenz [d,f] [1,3,2] dioxaphosphepin (D).

The styrene-based copolymer or the styrene-based resin composition may contain, as long as they do not deteriorate the effect of the present invention, other resin components, impact modifiers, fluidity modifiers, hardness modifiers, antioxidants, flame retardant, plasticizer, lubricant, release agent, ultraviolet absorber, light stabilizer, antimicrobial agent, antifungal agent, antistatic agent, dye and the like.

Vicat softening temperature of the styrene-based copolymer or the styrene-based resin composition measured in the condition of a load of 50 N is 125 °C or more, more preferably 130 °C or more. When Vicat softening temperature is 125 °C or more, a molded article excellent in heat resistance can be obtained. In addition, the effect of imparting heat resistance to methacrylic resin also increases. Vicat softening temperature is a measurement value using Method 50 (load: 50N, temperature raising speed 50 °C/hour) in accordance with JIS K7206:1999, and a test piece having a size of 10 mm × 10 mm and a thickness of 4 mm.

From the transparency, in the styrene-based copolymer or the styrene-based resin composition, the total light transmittance being measured in accordance with ASTM D1003 for a sample with 2 mm thickness is preferably 88% or more, more preferably 90% or more. In addition, the haze of 2 mm thickness is preferably 1.0% or less, more preferably 0.5% or less. The b value of 2 mm thickness measured in accordance with JIS K7105 is preferably 1.5 or less, more preferably 1.0 or less.

The styrene-based copolymer or the styrene-based resin composition of the present invention can be used for applications requiring transparency, heat resistance and good hue. Examples of the applications include parts of household electric appliances, automobile parts, building materials, optical members, and the like. Further, because of excellent moldability, molded articles can be produced by various known molding methods such as extrusion molding method and injection molding method. Further, the styrene-based copolymer or the styrene-based resin composition can be blended with a methacrylic resin to prepare a resin composition, which can be used as various molded articles for the same purpose.

### EXAMPLES

The present invention is described in further details below with Examples. The present embodiments are not limited to them.

### <Manufacturing Example of Styrene-based Copolymer (A-1)>

A 20% maleic acid anhydride solution was prepared by dissolving maleic acid anhydride in methyl isobutyl ketone so that the maleic acid anhydride is contained by 20 mass%, and a 2% t-butyl peroxy-2-ethyl hexanoate solution was prepared by diluting t-butyl peroxy-2-ethyl hexanoate with methyl isobutyl ketone so that the t-butyl peroxy-2-ethyl hexanoate is contained by 2 mass%. These solutions were used in the polymerization.

To a 120 liter autoclave equipped with an agitator, 20% maleic acid anhydride solution (3.6 kg), styrene (24 kg), methyl methacrylate (8.8 kg), and t-dodecyl mercaptan (20 g) were added. The gas in the remaining space of the autoclave was replaced with nitrogen gas, and the temperature of the mixture was raised to 88 °C taking 40 minutes with agitation. After raising the temperature, the temperature of the mixture was kept at 88 °C, the 20% maleic acid anhydride solution was added separately at an addition speed of 2.7 kg/hour, and the 2% t-butyl peroxy-2-ethyl hexanoate solution was added separately at an addition speed of 375 g/hour. Here, each of the solutions was added continuously for 8 hours. Subsequently, the separate addition of the 2% t-butyl peroxy-2-ethyl hexanoate solution was terminated, and t-butyl peroxy isopropyl monocarbonate (40 g) was added. On the other hand, the 20% maleic acid anhydride solution was added separately keeping the addition speed of 2.7 kg/hour, and the temperature of the mixture was raised to 120 °C with a temperature raising speed of 8 °C/hour taking 4 hours. The separate addition of the 20% maleic acid anhydride solution was terminated when the accumulated amount of the separate addition reached 32.4 kg. After the temperature of the mixture was raised, the mixture was kept at 120 °C for 1 hour, and the polymerization was completed. The polymerization solution was continuously fed to a twin-screw devolatilizing extruder using a gear pump, followed by devolatilization treatment of methyl isobutyl ketone, a small amount of unreacted monomers, and the like. Subsequently, the resultant was extruded as a strand and was cut into pellets of the styrene-based copolymer (A-1). The copolymer (A-1) thus obtained was subjected to composition analysis using C-13NMR method. Subsequently, molecular weight was measured using GPC.

Analysis of Composition revealed that the constituent units of A-1 were 60 mass% of styrene monomer unit, 22 mass% of methyl methacrylate monomer unit and 18 mass% of maleic anhydride monomer unit. The amount of residual maleic anhydride monomer in A-1 was less than the detection lower limit (<60 ppm). The weight average molecular weight (Mw) was 16 x 10⁴ and the ratio Mw/Mn to the number average molecular weight (Mn) was 2.4. The total light transmittance of the 2 mmt specular plate molded by injection molding was 91%.

### <Manufacturing Example of Styrene-based Copolymer (A-2)>

The 20% maleic acid anhydride solution and the 2% t-butyl peroxy-2-ethyl hexanoate solution were prepared in a similar manner as A-1.

To a 120 liter autoclave equipped with an agitator, 20% maleic acid anhydride solution (2.8 kg), styrene (25.6 kg), methyl methacrylate (8.8 kg), and t-dodecyl mercaptan (20 g) were added. The gas in the remaining space of the autoclave was replaced with nitrogen gas, and the temperature of the mixture was raised to 88 °C taking 40 minutes with agitation. After raising the temperature, the temperature of the mixture was kept at 88 °C, the 20% maleic acid anhydride solution was added separately at an addition speed of 2.1 kg/hour, and the 2% t-butyl peroxy-2-ethyl hexanoate solution was added separately at an addition speed of 500 g/hour. Here, each of the solutions was added continuously for 8 hours. Subsequently, the separate addition of the 2% t-butyl peroxy-2-ethyl hexanoate solution was terminated, and t-butyl peroxy isopropyl monocarbonate (40 g) was added. On the other hand, the 20% maleic acid anhydride solution was added separately keeping the addition speed of 2.1 kg/hour, and the temperature of the mixture was raised to 120 °C with a temperature raising speed of 8 °C/hour taking 4 hours. The separate addition of the 20% maleic acid anhydride solution was terminated when the accumulated amount of the separate addition reached 25.2 kg. After the temperature of the mixture was raised, the mixture was kept at 120 °C for 1 hour, and the polymerization was completed. The polymerization solution was continuously fed to a twin-screw devolatilizing extruder using a gear pump, followed by devolatilization treatment of methyl isobutyl ketone, a small amount of unreacted monomers, and the like. Subsequently, the resultant was extruded as a strand and was cut into pellets of the styrene-based copolymer (A-2). With respect to the resulting A-2, composition analysis is performed and molecular weight and total light transmittance were measured in the same manner as in A-1.

Analysis of Composition revealed that the constituent units of A-2 were 64 mass% of styrene monomer unit, 22 mass% of methyl methacrylate monomer unit and 14 mass% of maleic anhydride monomer unit. The amount of residual maleic anhydride monomer in A-2 was less than the detection lower limit (<60 ppm). The weight average molecular weight (Mw) was 17 x 10⁴ and the ratio Mw/Mn to the number average molecular weight (Mn) was 2.6. The total light transmittance of the 2 mmt specular plate molded by injection molding was 91%.

### <Manufacturing Example of Styrene-based Copolymer (A-3)>

A 25% maleic acid anhydride solution was prepared by dissolving maleic acid anhydride in methyl isobutyl ketone so that the maleic acid anhydride is contained by 25 mass%, and a 2% t-butyl peroxy-2-ethyl hexanoate solution was prepared same as (A-1). These solutions were used in the polymerization.

To a 120 liter autoclave equipped with an agitator, 25% maleic acid anhydride solution (3.52 kg), styrene (24 kg), methyl methacrylate (7.2 kg), and t-dodecyl mercaptan (20 g) were added. The gas in the remaining space of the autoclave was replaced with nitrogen gas, and the temperature of the mixture was raised to 92 °C taking 40 minutes with agitation. After raising the temperature, the temperature of the mixture was kept at 92 °C, the 25% maleic acid anhydride solution (31.71 kg in a total amount) was added separately while changing an addition rate in stages (at the addition speed of 3.96 kg/hour until 4 hour from the start, 3.17 kg/hour from 4 to 7 hour, 1.58 kg/hour from 7 to 10 hour, 0.54 kg/hour from 10 to 13 hour). The 2% t-butyl peroxy-2-ethyl hexanoate solution (4.02 kg in a total amount) was added separately while changing an addition rate in stages (at the addition speed of 0.24 kg/hour until 7 hour from the start, 0.39 kg/hour from 7 to 13 hour). The polymerization temperature was maintained at 92 °C until 7 hour from the start of the addition, then the temperature was raised to 116 °C over 6 hours at a rate of temperature increase of 4 °C /hour, further maintained at 116 °C for 1 hour, and the polymerization was completed. The polymerization solution was continuously fed to a twin-screw devolatilizing extruder using a gear pump, followed by devolatilization treatment of methyl isobutyl ketone, a small amount of unreacted monomers, and the like. Subsequently, the resultant was extruded as a strand and was cut into pellets of the styrene-based copolymer (A-3). With respect to the resulting A-3, composition analysis is performed and molecular weight and total light transmittance were measured in the same manner as in A-1.

Analysis of Composition revealed that the constituent units of A-2 were 60 mass% of styrene monomer unit, 18 mass% of methyl methacrylate monomer unit and 22 mass% of maleic anhydride monomer unit. The amount of residual maleic anhydride monomer in A-3 was less than the detection lower limit (<60 ppm). The weight average molecular weight (Mw) was 16 x 10⁴ and the ratio Mw/Mn to the number average molecular weight (Mn) was 2.4. The total light transmittance of the 2 mmt specular plate molded by injection molding was 90%.

### <Manufacturing Example of Styrene-based Copolymer (A-4)>

The 20% maleic acid anhydride solution and the 2% t-butyl peroxy-2-ethyl hexanoate solution were prepared in a similar manner as A-1.

To a 120 liter autoclave equipped with an agitator, 20% maleic acid anhydride solution (3.6 kg), styrene (24 kg), methyl methacrylate (8.8 kg), and t-dodecyl mercaptan (20 g) were added. The gas in the remaining space of the autoclave was replaced with nitrogen gas, and the temperature of the mixture was raised to 88 °C taking 40 minutes with agitation. After raising the temperature, the temperature of the mixture was kept at 88 °C, the 20% maleic acid anhydride solution was added separately at an addition speed of 2.65 kg/hour, and the 2% t-butyl peroxy-2-ethyl hexanoate solution was added separately at an addition speed of 375 g/hour. Here, each of the solutions was added continuously for 8 hours. Subsequently, the separate addition of the 2% t-butyl peroxy-2-ethyl hexanoate solution was terminated, and t-butyl peroxy isopropyl monocarbonate (40 g) was added. On the other hand, the 20% maleic acid anhydride solution was added separately keeping the addition speed of 2.65 kg/hour, and the temperature of the mixture was raised to 120 °C with a temperature raising speed of 8 °C/hour taking 4 hours. The separate addition of the 20% maleic acid anhydride solution was terminated when the accumulated amount of the separate addition reached 32.4 kg. After the temperature of the mixture was raised, the mixture was kept at 120 °C for 1 hour, and the polymerization was completed. The polymerization solution was continuously fed to a twin-screw devolatilizing extruder using a gear pump, followed by devolatilization treatment of methyl isobutyl ketone, a small amount of unreacted monomers, and the like. Subsequently, the resultant was extruded as a strand and was cut into pellets of the styrene-based copolymer (A-4). With respect to the resulting A-4, composition analysis is performed and molecular weight and total light transmittance were measured in the same manner as in A-1.

Analysis of Composition revealed that the constituent units of A-4 were 60 mass% of styrene monomer unit, 22 mass% of methyl methacrylate monomer unit and 18 mass% of maleic anhydride monomer unit. The amount of residual maleic anhydride monomer in A-4 was 80 ppm. The weight average molecular weight was 16 x 10⁴ and the ratio Mw/Mn to the number average molecular weight (Mn) was 2.4. The total light transmittance of the 2 mmt specular plate molded by injection molding was 91%.

### <Manufacturing Example of Styrene-based Copolymer (A-5)>

The 20% maleic acid anhydride solution and the 2% t-butyl peroxy-2-ethyl hexanoate solution were prepared in a similar manner as A-1.

To a 120 liter autoclave equipped with an agitator, 20% maleic acid anhydride solution (3.6 kg), styrene (24 kg), methyl methacrylate (8.8 kg), and t-dodecyl mercaptan (20 g) were added. The gas in the remaining space of the autoclave was replaced with nitrogen gas, and the temperature of the mixture was raised to 88 °C taking 40 minutes with agitation. After raising the temperature, the temperature of the mixture was kept at 88 °C, the 20% maleic acid anhydride solution was added separately at an addition speed of 2.6 kg/hour, and the 2% t-butyl peroxy-2-ethyl hexanoate solution was added separately at an addition speed of 375 g/hour. Here, each of the solutions was added continuously for 8 hours. Subsequently, the separate addition of the 2% t-butyl peroxy-2-ethyl hexanoate solution was terminated, and t-butyl peroxy isopropyl monocarbonate (40 g) was added. On the other hand, the 20% maleic acid anhydride solution was added separately keeping the addition speed of 2.65 kg/hour, and the temperature of the mixture was raised to 120 °C with a temperature raising speed of 8 °C/hour taking 4 hours. The separate addition of the 20% maleic acid anhydride solution was terminated when the accumulated amount of the separate addition reached 32.4 kg. After the temperature of the mixture was raised, the mixture was kept at 120 °C for 1 hour, and the polymerization was completed. The polymerization solution was continuously fed to a twin-screw devolatilizing extruder using a gear pump, followed by devolatilization treatment of methyl isobutyl ketone, a small amount of unreacted monomers, and the like. Subsequently, the resultant was extruded as a strand and was cut into pellets of the styrene-based copolymer (A-5). With respect to the resulting A-5, composition analysis is performed and molecular weight and total light transmittance were measured in the same manner as in A-1.

Analysis of Composition revealed that the constituent units of A-5 were 60 mass% of styrene monomer unit, 22 mass% of methyl methacrylate monomer unit and 18 mass% of maleic anhydride monomer unit. The amount of residual maleic anhydride monomer in A-5 was 230 ppm. The weight average molecular weight was 16 x 10⁴ and the ratio Mw/Mn to the number average molecular weight (Mn) was 2.4. The total light transmittance of the 2 mmt specular plate molded by injection molding was 91%.

### <Manufacturing Example of Styrene-based Copolymer (A-6)>

A styrene-based copolymer A-6 was obtained according to Example 8 of JPS 57-153008. With respect to the resulting A-5, composition analysis is performed and molecular weight and total light transmittance were measured in the same manner as in A-1.

Analysis of Composition revealed that the constituent units of A-6 were 20 mass% of styrene monomer unit, 60 mass% of methyl methacrylate monomer unit and 20 mass% of maleic anhydride monomer unit. The amount of residual maleic anhydride monomer in A-6 was 5000 ppm. The weight average molecular weight was 14 x 10⁴ and the ratio Mw/Mn to the number average molecular weight (Mn) was 2.3. The total light transmittance of the 2 mmt specular plate molded by injection molding was 91%.

### <Examples and Comparative Examples>

The styrene-based copolymers (A-1) to (A-6), the phenol antioxidant (B-1), the phosphorus-based antioxidants (C-1) to (C-4), 6-[3-(3-t-butyl-4-hydroxy-5-methylphenyl) propoxy] -2,4,8,10-tetra-t-butylbenz [d,f] [1,3,2] dioxaphosphepin (D-1) and the methacrylic resin (E-1) were mixed in the proportions shown in Tables 1 and 2 using a Henschel mixer, and then pelletized by melt blending and extruding with a single screw extruder having a screw diameter of 40 mm (MS-40 available from Ikegai Corp) under conditions 240 °C of cylinder temperature, 20 kg/h of discharge rate, 100 rpm of screw rotation speed and nitrogen purge. Even in the case of using only the styrene copolymer, extrusion was carried out in order to adjust the thermal history. The antioxidants and the methacrylic resin used are as follows.
(B-1) Octadecyl-3-(3,5-di-t-butyl-4-hydroxyphenyl)propionate (Irganox 1076 available from BASF Japan Ltd.)
(C-1) 3,9-bis (2,6-di-tert-butyl-4-methylphenoxy) -2,4,8,10-tetraoxa-3,9-diphosphaspiro [5.5] undecane (ADK STAB PEP-36 available from ADEKA Corporation)
(C-2) Bis (2,4-dicumylphenyl) pentaerythritol diphosphite (Doverphos S-9228 available from Dover Chemical Corporation)
(C-3) 2,2'-methylenebis (4,6-di-tert-butyl-1-phenyloxy)(2-ethylhexyloxy) phosphorus (ADK STAB HP-10 available from ADEKA Corporation)
(C-4) Tris (2,4-di-tert-butylphenyl) phosphite (Irgafos 168 available from BASF Japan Ltd.)
(D-1) 6-[3-(3-t-butyl-4-hydroxy-5-methylphenyl) propoxy] -2,4,8,10-tetra-t-butylbenz [d,f] [1,3,2] dioxaphosphepin (Sumilizer GP available from Sumitomo Chemical Co., Ltd.)
(E-1) PMMA resin (Sumipex MH available from Sumitomo Chemical Co., Ltd.)

The pellets obtained were evaluated as follows. Evaluation results are shown in Tables 1 and 2.

### (Vicat Softening Temperature)

The Vicat softening temperature was measured in accordance with JIS K7206:1999. Here, Method 50 (load: 50N, temperature raising speed 50°C/hour) was used, and the test piece having the size of 10 mm x 10 mm and 4 mm thickness was used. HDT & VSP testing apparatus (available from Toyo Seiki Seisaku-sho, Ltd.) was used as the measuring apparatus.

### (Total Light Transmittance, Haze, Hue)

The total light transmittance and the haze were measured as follows. First, a mirror plate having a length of 90 mm, a width of 55 mm, and a thickness of 2 mm was prepared using an injection molding machine (IS-50EPN, available from TOSHIBA MACHINE CO., LTD.), with the molding conditions of a cylinder temperature of 240 °C and a mold temperature of 70 °C. Then, the mirror plate was subjected to the measurement in compliance with ASTM D1003, using a haze meter (NDH-1001DP, available from NIPPON DENSHOKU INDUSTRIES CO., LTD.). In addition, b value was measured using an ultraviolet visible spectrophotometer (V-670, available from JASCO Corporation) in accordance with JIS K7105.

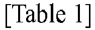

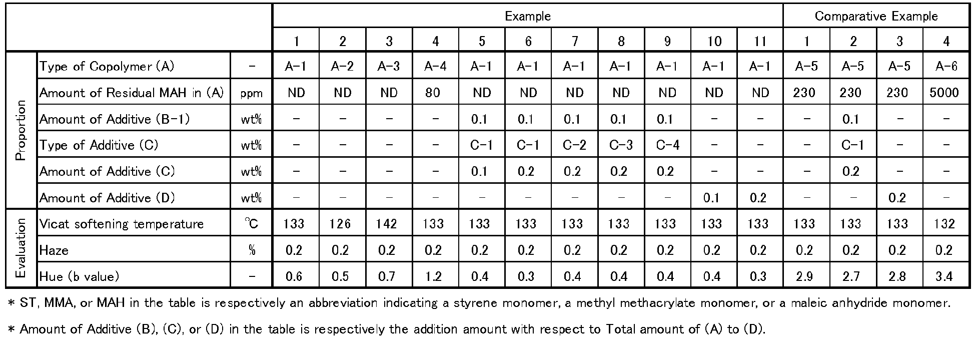

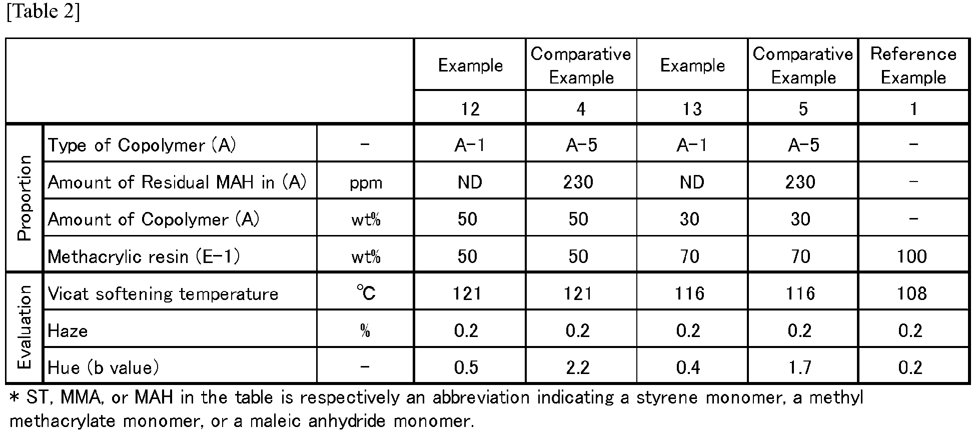

The examples had a high heat resistance, good transparency and hue. On the other hand, in the comparative examples, hue was inferior. Similar results were obtained when a methacrylic resin was blended.

### Industrial Applicability

Since the styrene-based copolymer and styrene-based resin composition of the present invention are transparent and excellent in hue, they are useful for parts of household electric appliances, automobile parts, building materials, optical members, food containers and the like of requiring heat resistance and good appearance. The styrene-based copolymer and styrene-based resin composition of the present invention can be also used by mixing with a methacrylic resin, which are transparent and excellent in hue, to improve heat resistance thereof.

## Claims

1. A transparent styrene-based copolymer (A), comprising:
a styrene-based monomer unit;
a (meth) acrylate ester-based monomer unit; and
an unsaturated dicarboxylic acid anhydride-based monomer unit, wherein
a content of residual unsaturated dicarboxylic acid anhydride-based monomer is 100 ppm or less.

2. The transparent styrene-based copolymer (A) of Claim 1, comprising:
45 to 85 mass% of the styrene-based monomer unit;
5 to 45 mass% of the (meth) acrylic acid ester-based monomer unit; and
10 to 30 mass% of the unsaturated dicarboxylic acid anhydride-based monomer unit.

3. The transparent styrene-based copolymer (A) of Claim 1 or 2, wherein the transparent styrene-based copolymer (A) is used for improving heat resistance of a methacrylic resin.

4. The transparent styrene-based copolymer (A) of any one of Claims 1 to 3, wherein Vicat softening temperature measured in the condition of a load of 50 N is 125 °C or more.

5. A transparent styrene-based resin composition, comprising:
the transparent styrene-based copolymer (A) of any one of Claims 1 to 4;
a hindered phenol-based antioxidant (B); and
a phosphorus-based antioxidant (C), wherein
a content of (B) is 0.02 to 0.5 mass% and a content of (C) is 0.02 to 0.5 mass% with respect to the total amount of (A) to (C).

6. A transparent styrene-based resin composition, comprising:
the transparent styrene-based copolymer (A) of any one of Claims 1 to 4; and
6-[3-(3-t-butyl-4-hydroxy-5-methylphenyl)propoxy]-2,4,8,10-tetra-t-butylbenz [d, f] [1,3,2] dioxaphosphepin (D), wherein
a content of (D) is 0.02 to 0.5 mass% with respect to the total amount of (A) and (D).

7. The transparent styrene-based resin composition of Claim 5 or 6, wherein Vicat softening temperature measured in the condition of a load of 50 N is 125 °C or more.

8. A resin composition, comprising:
the transparent styrene-based copolymer (A) of any one of Claims 1 to 4; and
a methacrylic resin.

9. A resin composition, comprising:
the transparent resin composition of any one of Claims 5 to 7; and
a methacrylic resin.

10. A molded article comprising the transparent styrene-based copolymer (A) of any one of Claims 1 to 4.

11. A molded article comprising the transparent resin composition of any one of Claims 5 to 7.

12. A molded article comprising the resin composition of Claim 8 or 9.
